# EUROPEAN PATENT SPECIFICATION

(11) **EP 2 622 110 B1**
(45) Date of publication and mention of the grant of the patent: **12.08.2015**
(21) Application number: 11787639.1
(22) Date of filing: 07.11.2011
(51) Int. Cl.: C23C 4/08, C23C 4/12, F01D 5/28, F01D 25/00

(54) **METALLIC BONDCOAT OR ALLOY WITH A HIGH y/y' TRANSITION TEMPERATURE AND A COMPONENT**
METALLISCHE BONDBESCHICHTUNG ODER LEGIERUNG MIT HOHER Y/Y'-ÜBERGANGSTEMPERATUR UND KOMPONENTE
COUCHE D'ACCROCHAGE MÉTALLIQUE OU ALLIAGE AYANT UNE TEMPÉRATURE DE TRANSITION GAMMA/GAMMA' ÉLEVÉE ET UN COMPOSANT

(30) Priority: 24.11.2010 US 953531
(43) Date of publication of application: 07.08.2013
(73) Proprietor: Siemens Aktiengesellschaft, 80333 München (DE)
(72) Inventor: KULKARNI, Anand, A., Oviedo, FL 32766 (US); SHIPPER, Jr., Jonathan E., Orlando, FL 32817 (US); STAMM, Werner, 45481 Mülheim an der Ruhr (DE)
(86) International application number: PCT/EP2011/069515
(87) International publication number: WO 2012/069306

(56) References cited:
- WO-A1-2011/119145
- WO-A1-2011/119147
- US-A- 4 447 503

## Description

The invention relates to a metallic bondcoat with phases of γ and γ' a component.

Components for the hot gas path in gas turbines are made from Ni- or Co based materials. These materials are optimized for strength and are not able to withstand oxidation and/or corrosion attack at higher temperatures. Therefore, these kinds of materials must be protected against oxidation by MCrAlY-coatings which can be used as bondcoats for thermal barrier coating (TBC) systems as well. In TBS systems, the MCrAlY coating is needed against hot gas attack on one side and on the other side this coating is needed to adhere the TBC to the substrate. Improving such systems against oxidation will lead to increased bondcoats service temperatures with increased life properties.

US 4,447,503 discloses a nickel-, cobalt- or iron-based super alloy with addition of manganese (Mn) and the addition of tantalum, silicon and hafnium.

These elements render the metallic coating or alloy brittle which is not desired during thermal cycling of a component having such a metallic alloy of coating.

To protect the materials against hot corrosion/oxidation, MCrAlY overlay coatings are coated mainly by low pressure plasma spraying (LPPS), air plasma spraying (APS), electron beam physical vapor deposition (EBPVD), cold spray (CS) or high velocity oxy-fuel (HVOF) process. The MCrAlY coating is based on nickel and/or cobalt, chromium, aluminum, silicon, rhenium and rare earth elements like yttrium. With increasing bondcoat temperatures, these coatings can fail which can lead to spallation of the thermal barrier coating. Therefore, with increasing service temperatures, improved coatings are needed to withstand the oxidation attack. Additionally this kind of coatings should have acceptable thermo-mechanical properties. These requests can only be achieved by an optimized composition of the bond coat.

It is therefore the aim of the invention to solve the above mentioned problem.

The problem is solved by a metallic coating or an alloy according to claim 1 and a component according to claim 3.

In the dependent claims further amendments are disclosed which can be arbitrarily combined with each other to yield further advantages.

It shows
- figure 1: a turbine blade,
- figure 2: a gas turbine and

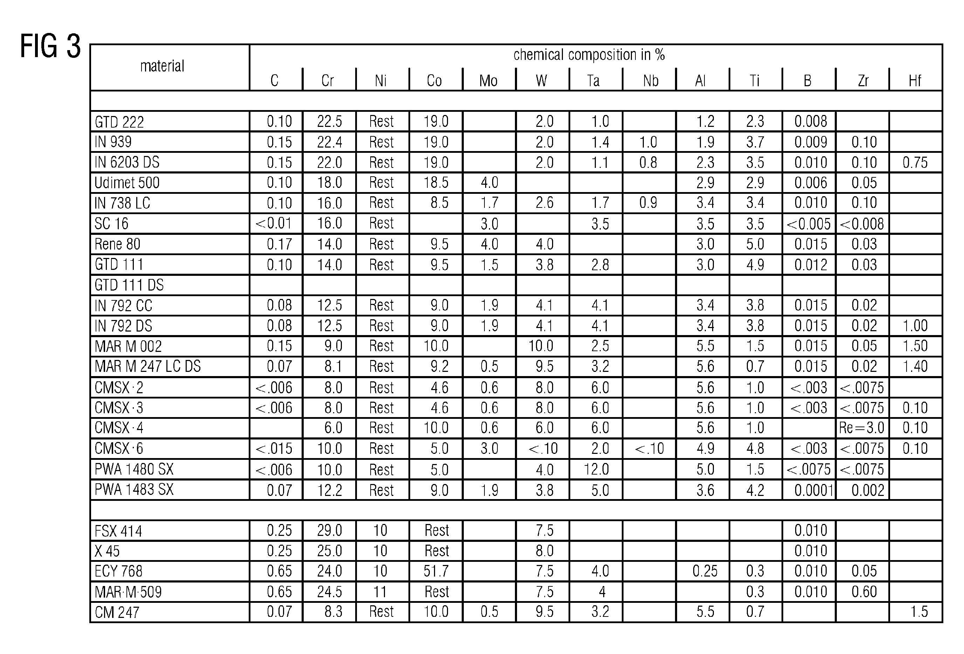

- figure 3: a list of superalloys.

The figures and the description are only embodiments of the invention.

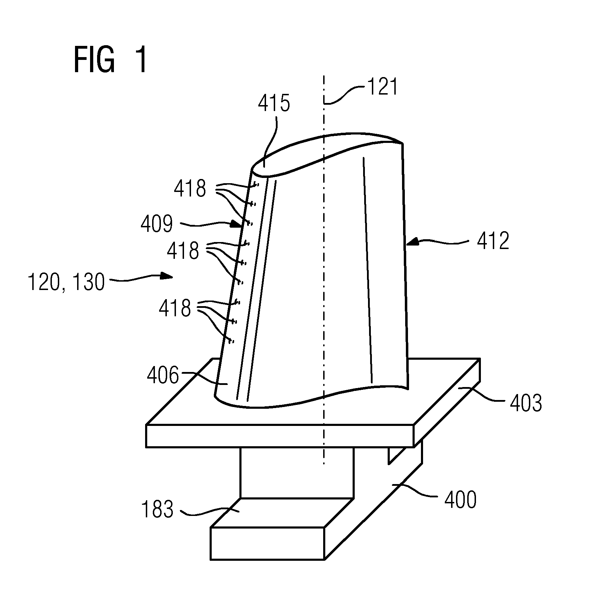

Figure 1 shows a perspective view of a rotor blade 120 or guide vane 130 of a turbomachine, which extends along a longitudinal axis 121.

The turbomachine may be a gas turbine of an aircraft or of a power plant for generating electricity, a steam turbine or a compressor.

The blade or vane 120, 130 has, in succession along the longitudinal axis 121, a securing region 400, an adjoining blade or vane platform 403 and a main blade or vane part 406 as well as a blade or vane tip 415.

As a guide vane 130, the vane 130 may have a further platform (not shown) at its vane tip 415.

A blade or vane root 183, which is used to secure the rotor blades 120, 130 to a shaft or disk (not shown), is formed in the securing region 400.

The blade or vane root 183 is designed, for example, in hammerhead form. Other configurations, such as a fir-tree or dovetail root, are possible.

The blade or vane 120, 130 has a leading edge 409 and a trailing edge 412 for a medium which flows past the main blade or vane part 406.

In the case of conventional blades or vanes 120, 130, by way of example solid metallic materials, in particular superalloys, are used in all regions 400, 403, 406 of the blade or vane 120, 130.

Superalloys of this type are known, for example, from EP 1 204 776 B1, EP 1 306 454, EP 1 319 729 A1, WO 99/67435 or WO 00/44949.

The blade or vane 120, 130 may in this case be produced by a casting process, also by means of directional solidification, by a forging process, by a milling process or combinations thereof.

Workpieces with a single-crystal structure or structures are used as components for machines which, in operation, are exposed to high mechanical, thermal and/or chemical stresses. Single-crystal workpieces of this type are produced, for example, by directional solidification from the melt. This involves casting processes in which the liquid metallic alloy solidifies to form the single-crystal structure, i.e. the single-crystal workpiece, or solidifies directionally.

In this case, dendritic crystals are oriented along the direction of heat flow and form either a columnar crystalline grain structure (i.e. grains which run over the entire length of the workpiece and are referred to here, in accordance with the language customarily used, as directionally solidified) or a single-crystal structure, i.e. the entire workpiece consists of one single crystal. In these processes, a transition to globular (polycrystalline) solidification needs to be avoided, since non-directional growth inevitably forms transverse and longitudinal grain boundaries, which negate the favorable properties of the directionally solidified or single-crystal component.

Where the text refers in general terms to directionally solidified microstructures, this is to be understood as meaning both single crystals, which do not have any grain boundaries or at most have small-angle grain boundaries, and columnar crystal structures, which do have grain boundaries running in the longitudinal direction but do not have any transverse grain boundaries. This second form of crystalline structures is also described as directionally solidified microstructures (directionally solidified structures). Processes of this type are known from US A 6,024,792 and EP 0 892 090 A1.

The blades or vanes 120, 130 may likewise have coatings protecting against corrosion or oxidation, e.g. MCrAlX (M is at least one element selected from the group consisting of iron (Fe), cobalt (Co), nickel (Ni), X is an active element and represents yttrium (Y) and/or silicon and/or at least one rare earth element, or hafnium (Hf)). Alloys of this type are known from EP 0 486 489 B1, EP 0 786 017 B1, EP 0 412 397 B1 or EP 1 306 454 A1.

The density is preferably 95% of the theoretical density.

A protective aluminum oxide layer (TGO = thermally grown oxide layer) forms on the MCrAlX layer (as an intermediate layer or an outermost layer).

It is also possible for a thermal barrier coating, consisting for example of ZrO₂, Y₂O₃-ZrO₂, i.e. unstabilized, partially stabilized or fully stabilized by yttrium oxide and/or calcium oxide and/or magnesium oxide and/or one or more of rare earth element (lanthanum, gadolinium, yttrium, etc.), which is preferably the outermost layer, to be present on the MCrAlX.

The thermal barrier coating covers the entire MCrAlX layer. Columnar grains are produced in the thermal barrier coating by means of suitable coating processes, such as for example electron beam physical vapor deposition (EB-PVD).

Other coating processes are conceivable, for example atmospheric plasma spraying (APS), LPPS, VPS, solution precursor plasma spray (SPPS) or CVD. The thermal barrier coating may include porous grains which have microcracks or macrocracks for improving its resistance to thermal shocks. The thermal barrier coating is therefore preferably more porous than the MCrAlX layer.

The blade or vane 120, 130 may be hollow or solid in form. If the blade or vane 120, 130 is to be cooled, it is hollow and may also have film-cooling holes 418 (indicated by dashed lines).

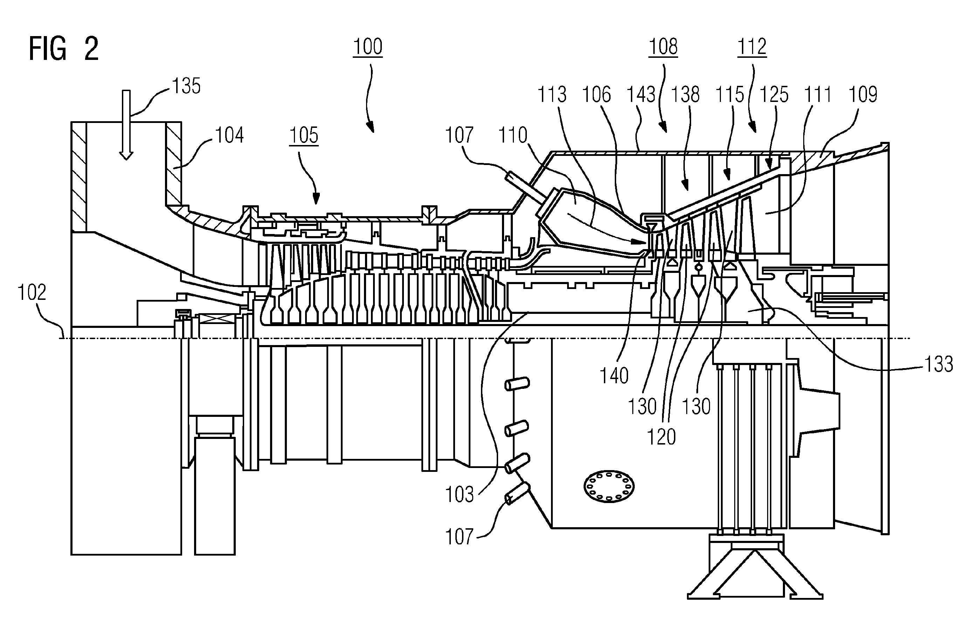

Figure 2 shows, by way of example, a partial longitudinal section through a gas turbine 100.

In the interior, the gas turbine 100 has a rotor 103 which is mounted such that it can rotate about an axis of rotation 102, has a shaft 101 and is also referred to as the turbine rotor.

An intake housing 104, a compressor 105, a, for example, toroidal combustion chamber 110, in particular an annular combustion chamber, with a plurality of coaxially arranged burners 107, a turbine 108 and the exhaust-gas housing 109 follow one another along the rotor 103.

The annular combustion chamber 110 is in communication with a, for example, annular hot-gas passage 111, where, by way of example, four successive turbine stages 112 form the turbine 108.

Each turbine stage 112 is formed, for example, from two blade or vane rings. As seen in the direction of flow of a working medium 113, in the hot-gas passage 111 a row of guide vanes 115 is followed by a row 125 formed from rotor blades 120.

The guide vanes 130 are secured to an inner housing 138 of a stator 143, whereas the rotor blades 120 of a row 125 are fitted to the rotor 103 for example by means of a turbine disk 133.

A generator (not shown) is coupled to the rotor 103.

While the gas turbine 100 is operating, the compressor 105 sucks in air 135 through the intake housing 104 and compresses it. The compressed air provided at the turbine-side end of the compressor 105 is passed to the burners 107, where it is mixed with a fuel. The mix is then burnt in the combustion chamber 110, forming the working medium 113. From there, the working medium 113 flows along the hot-gas passage 111 past the guide vanes 130 and the rotor blades 120. The working medium 113 is expanded at the rotor blades 120, transferring its momentum, so that the rotor blades 120 drive the rotor 103 and the latter in turn drives the generator coupled to it.

While the gas turbine 100 is operating, the components which are exposed to the hot working medium 113 are subject to thermal stresses. The guide vanes 130 and rotor blades 120 of the first turbine stage 112, as seen in the direction of flow of the working medium 113, together with the heat shield bricks which line the annular combustion chamber 110, are subject to the highest thermal stresses.

To be able to withstand the temperatures which prevail there, they can be cooled by means of a coolant.

Substrates of the components may likewise have a directional structure, i.e. they are in single-crystal form (SX structure) or have only longitudinally oriented grains (DS structure).

By way of example, iron-based, nickel-based or cobalt-based superalloys are used as material for the components, in particular for the turbine blade or vane 120, 130 and components of the combustion chamber 110.

Superalloys of this type are known, for example, from EP 1 204 776 B1, EP 1 306 454, EP 1 319 729 A1, WO 99/67435 or WO 00/44949.

The guide vane 130 has a guide vane root (not shown here) facing the inner housing 138 of the turbine 108 and a guide vane head at the opposite end from the guide vane root. The guide vane head faces the rotor 103 and is fixed to a securing ring 140 of the stator 143.

A new modified coating was developed which fulfils the requirements described above. This coating has a good long term life, acceptable mechanical properties and improved oxidation resistance. This is based on the presence of tantalum (Ta) in a nickel based alloy but without rhenium (Re). Tantalum (Ta) stabilizes the formation of a three phase system (γ'/γ/β) with a high γ'/γ transition temperature. This will reduce the local stresses as well because tantalum (Ta) will stabilize the high transition temperatures of γ' which is higher than the bondcoat service temperature.

Very good results show the following elemental composition for getting the proposed 3-phase-system with increased γ' transition temperatures:

Ni-23Co-20Cr-10Al-4.5Ta.

A composition (Ni-25Co-17Cr-10Al-1.5Re-Y) which contains rhenium (Re) instead of tantalum (Ta) and which does not form part of the invention, has a lower γ'/γ transition temperature because no tantalum (Ta) is added.

The bondcoat is a nickel (Ni) based super alloy with addition of cobalt (Co), chromium (Cr), aluminum (Al), tantalum (Ta) and yttrium (Y) which is consisting of these elements.

## Claims

1. Metallic coating or alloy
which is nickel based and
contains the γ and γ' phases and optionally the β-phases **characterized in that**
the metallic coating or alloy consists of nickel (Ni), cobalt (Co), aluminum (Al), chromium (Cr), tantalum (Ta) and Yttrium (Y),
wherein the range of tantalum (Ta) between 3,0wt% to 6,0wt%,
wherein the amount of aluminum (Al) is between 8wt%-12wt%,
wherein the amount of yttrium (Y) is between 0,1wt%-0,7wt% and
wherein the amount of cobalt (Co) is the range between 21wt% - 25wt%,
and
wherein the amount of chromium (Cr) is between 18wt%-22wt%.

2. Coating or alloy according to claim 1,
which contains the β-phase, at least 5vol%.

3. Component,
which contains a metallic coating according to any of claim 1 to 2.

## Patentansprüche

1. Metallische Beschichtung oder Legierung,
die auf Nickel basiert und
die γ- und γ'-Phasen und gegebenenfalls die β-Phase enthält, **dadurch gekennzeichnet, dass**
die metallische Beschichtung oder Legierung aus Nickel (Ni), Cobalt (Co), Aluminium (Al), Chrom (Cr), Tantal (Ta) und Yttrium (Y) besteht,
wobei der Bereich von Tantal (Ta) zwischen 3,0 Gew.-% und 6,0 Gew.-% liegt,
wobei die Menge von Aluminium (Al) zwischen 8 Gew.-% - 12 Gew.-% liegt,
wobei die Menge von Yttrium (Y) zwischen 0,1 Gew.-% - 0,7 Gew.-% liegt und
wobei die Menge von Cobalt (Co) im Bereich zwischen 21 Gew.-% - 25 Gew.-% liegt
und
wobei die Menge von Chrom (Cr) zwischen 18 Gew.-% - 22 Gew.-% liegt.

2. Beschichtung oder Legierung nach Anspruch 1,
die die β-Phase, mindestens 5 Vol.-%, enthält.

3. Bauteil,
das eine metallische Beschichtung nach einem der Ansprüche 1 bis 2 enthält.

## Revendications

1. Revêtement métallique ou alliage
qui est à base de nickel et
qui contient les phases γ et γ' et facultativement la phase β **caractérisé en ce que**
le revêtement métallique ou alliage consiste seulement en nickel (Ni), cobalt (Co), aluminium (Al), chrome (Cr), tantale (Ta) et yttrium (Y),
dans lequel la plage du tantale (Ta) est comprise entre 3,0% en poids et 6,0% en poids,
dans lequel la quantité d'aluminium (Al) est comprise entre 8% en poids et 12% en poids,
dans lequel la quantité d'yttrium (Y) est comprise entre 0,1% en poids et 0,7% en poids et
dans lequel la quantité de cobalt (Co) est dans la plage comprise entre 21% en poids et 25% en poids,
et
dans lequel la quantité de chrome (Cr) est comprise entre 18% en poids et 22% en poids.

2. Revêtement ou alliage suivant la revendication 1,
qui contient la phase β, en au moins 5% en volume.

3. Composant,
qui contient un revêtement métallique suivant l'une quelconque des revendications 1 à 2.
